# EUROPEAN PATENT APPLICATION

(11) **EP 1 519 030 A1**
(43) Date of publication of application: **30.03.2005**
(21) Application number: 04022912.2
(22) Date of filing: 27.09.2004
(51) Int. Cl.: F02M 35/00

(54) **An air filter for a motor vehicle**

(30) Priority: 25.09.2003 IT TO20030746
(71) Applicant: FIAT AUTO S.p.A., 10135 Torino (IT)
(72) Inventor: Peirasso, Piero, 10135 Torino (IT)
(74) Representative: Quinterno, Giuseppe

(57) **Abstract**

The air filter (10) includes a cylindrical outer body (11) intended to be mounted essentially vertically and a dry filter element (15), in the form of a hollow cylinder, housed in the body (11) for filtering the air which enters through an inlet duct (12) and flows towards an intake duct (13) of the engine. The filter also includes a segment of tube (14) arranged inside the filter element (15) and the height of which is about half the height of the filter element (15), in such a manner that the air suction zone is moved away from the bottom of the filter, where there is the maximum depression caused by the intake duct and where the water retained by the filter element (15) is mostly concentrated during operation.

## Description

The present invention relates to an air filter for a motor vehicle, in particular for a vehicle with Otto or Diesel engine provided with an electronically-controlled fuel supply system.

Air filters for a motor vehicle are known, which basically comprise a cylindrical body intended to be mounted vertically and a filter element housed within the cylindrical body for filtering air entering the filter from an intake duct and flowing towards an outlet duct. The use of air filters of this type in a motor vehicle provided with an electronically-managed fuel supply system leads to malfunctions and breakdowns when the vehicle is travelling in heavy rain, especially if it is following a large vehicle. The problem is due to the fact that that under such operating conditions droplets of atomized water (aerosol) in the environment around the vehicle condense on the walls of the vertically-positioned filter element, pass through the filter paper in the region of greatest depression in the lower portion of the filter element, move into the intake duct dragged by the inward air flow and can lead to breakdowns of the air flow sensor, or mass air flow meter, arranged along the intake duct.

British Patent GB 300 509 discloses an air filter for an internal combustion engine which comprises a body having an air inlet channel and an air outlet channel. The outlet channel projects into the filter body so as to define, together with the side wall thereof, an annular space for containing liquid supplied by a reservoir. A wire gauze cylinder, around which a filter fabric is arranged, is housed within the filter body. The liquid which comes from the reservoir and collects in the aforesaid annular space moistens by capillarity the filter fabric. The air entering the filter via the inlet pipe passes through the filter fabric and is discharged via the outlet pipe. This known filter is also affected by the disadvantage discussed above, since no particular measure is provided to prevent the liquid from overflowing into the intake manifold.

The object of the present invention is therefore to provide an air filter for a motor vehicle which permits to avoid the aforesaid disadvantage of the prior art by means of simple and inexpensive measures.

This object is fully achieved according to the present invention by virtue of an air filter having the characteristics defined in Claim 1.

To summarize, the invention is based on the idea of introducing into the filter element of a conventional air filter (dry filter) intended to be mounted vertically a segment of tube extending from the bottom of the air filter to about half the height of the filter element.

Thanks to this simple measure, an effective barrier against the water droplets collecting in the lowest portion of the filter element is provided. In fact, the zone where the air is directly sucked is moved away from the bottom of the filter, where there is the maximum depression caused by the intake duct and where the water retained by the filter element is mostly concentrated during operation. The presence of the segment of tube within the filter element in the cylindrical body of the filter, in fact, permits to move the air suction zone upwards, that is, to an area where the water concentration in the filter element is lower. Accordingly, the separation of water particles in the air is minimum and the pressure drop is uniform along the whole filter element, which permits to reduce the formation of condensation points and the resulting separation of the water particles.

In comparison with the known air filters, the proposed arrangement permits to suck drier air or at least air carrying water particles of smaller size, as the filter element during operation is mainly saturated with water in the lower portion and therefore in this portion the water particles are of greater size.

The proposed solution thus permits to eliminate the risk of malfunctions caused by droplets of atomized water entering the air intake duct, without thereby:
- significantly increasing the pressure drop in the intake duct;
- reducing the filtering capacity and the accumulation of dust on the surface of the filter element;
- increasing the polluting emissions from the vehicle; and
- adversely affecting the performance and the fuel consumption of the vehicle.

In addition, this solution offers the advantage of being easy to apply, without high additional costs, to air filters currently being produced.

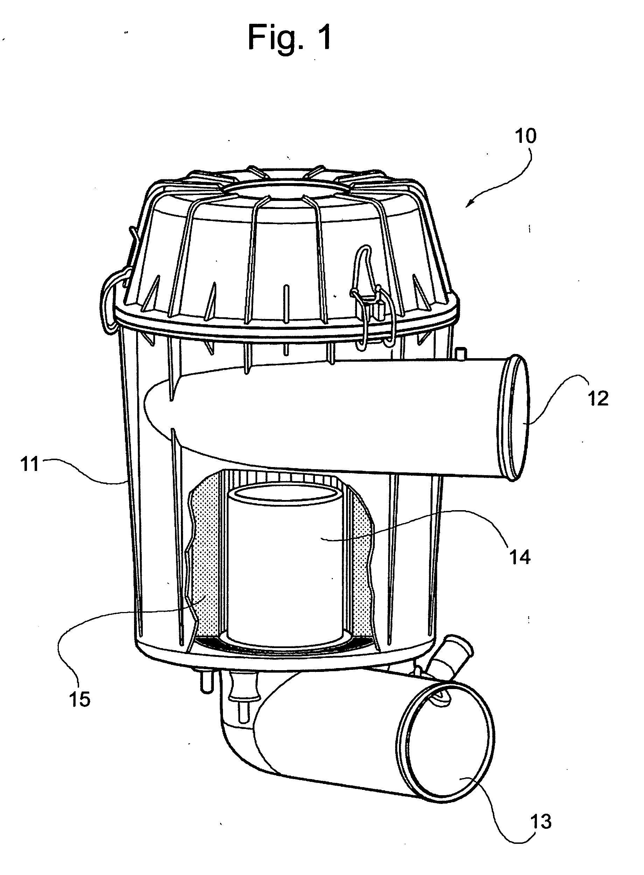

Further objects and advantages of the invention will result from the detailed description which follows, provided purely by way of non-limitative example with reference to the appended drawings, in which Figure 1 is a partially transparent perspective view of an air filter for a vehicle according to the present invention.

Numeral 10 in Figure 1 generally indicates an air filter for a motor vehicle having an essentially cylindrical outer body 11 mounted vertically and a filter element 15, of per-se-known, in the form of a hollow cylinder housed inside the cylindrical body 11 for filtering the air which enters through an inlet duct 12 and flows towards an intake duct 13 of the engine.

According to the invention, the air filter 10 is provided with a segment of tube 14 inserted into the filter element 15 on the bottom of the cylindrical body 11. The segment of tube 14 is arranged coaxially with the filter element 15 and extends preferably up to about half the height of this element. The segment of tube 14 is in connection at its lower end with the intake duct 13 of the engine and is open at its upper end. In this way, the air is sucked directly not at the bottom of the filter (unlike the air filters according to the prior art), where there is the maximum depression caused by the intake duct 13 and where the water retained by the filter element is mostly concentrated during operation, but at a certain distance from the bottom of the filter. The segment of tube 14 thus serves to provide a barrier against the droplets of atomized water which are possibly sucked by the filter and which collect in the lower portion of the filter element 15. The droplets are thus prevented from flowing towards the intake duct 13 of the engine and thereby damaging the air flow meter downstream of the filter 10. The fact that the height of the segment of tube 14 is about half the height of the filter element 15 permits to make the pressure drop uniform along the whole filter element, thereby reducing the formation of condensation points and the resulting separation of the water particles.

Naturally, the principle of the invention remaining unchanged, embodiments and manufacturing details may vary widely from those described and illustrated purely by way of non-limitative example.

## Claims

1. An air filter (10) for a motor vehicle, including an outer body (11) intended to be mounted essentially vertically and a dry filter element (15) in the form of a hollow cylinder housed in the body (11) for filtering the air which enters through an inlet duct (12) and flows towards an intake duct (13) of the engine, **characterised in that** it also includes a segment of tube (14) arranged inside the filter element (15), the said segment of tube (14) being in connection at its lower end with the intake duct (13) and being open at its upper end, whereby the air suction zone is moved away from the bottom of the filter.

2. An air filter according to Claim 1, wherein the height of the said segment of tube (14) is about half the height of the filter element (15).

3. A motor vehicle including an air filter according to Claim 1 or Claim 2.
